(19) Europäisches Patentamt
European Patent Office
Office européen des brevets

(11) Publication number : **0 519 712 A2**

(12) **EUROPEAN PATENT APPLICATION**

(21) Application number : **92305569.3**

(22) Date of filing : **17.06.92**

(51) Int. Cl.$^5$ : **H04B 10/20**, H04B 10/08

(30) Priority : **18.06.91 JP 173043/91**
**19.07.91 JP 179153/91**
**19.07.91 JP 179154/91**

(43) Date of publication of application :
**23.12.92 Bulletin 92/52**

(84) Designated Contracting States :
**AT BE CH DE DK ES FR GB GR IT LI LU NL SE**

(71) Applicant : **CANON KABUSHIKI KAISHA**
**30-2, 3-chome, Shimomaruko, Ohta-ku**
**Tokyo (JP)**

(72) Inventor : **Majima, Masao, c/o Canon Kabushiki Kaisha**
**3-30-2, Shimomaruko**
**Ohta-ku, Tokyo (JP)**
Inventor : **Nakamura, Kenji, c/o Canon Kabushiki Kaisha**
**3-30-2, Shimomaruko**
**Ohta-ku, Tokyo (JP)**
Inventor : **Yamamoto, Noboru, c/o Canon Kabushiki Kaisha**
**3-30-2, Shimomaruko**
**Ohta-ku, Tokyo (JP)**

(74) Representative : **Beresford, Keith Denis Lewis et al**
**BERESFORD & Co. 2-5 Warwick Court High Holborn**
**London WC1R 5DJ (GB)**

(54) **Bus-type communication network.**

(57) A bus-type communication network is shown, in which communications among a plurality of terminal equipments are performed via a bus. The network comprises a detector for detecting that the bus has been broken and a connector for connecting the ends of the bus in accordance with the detection result of the detection.

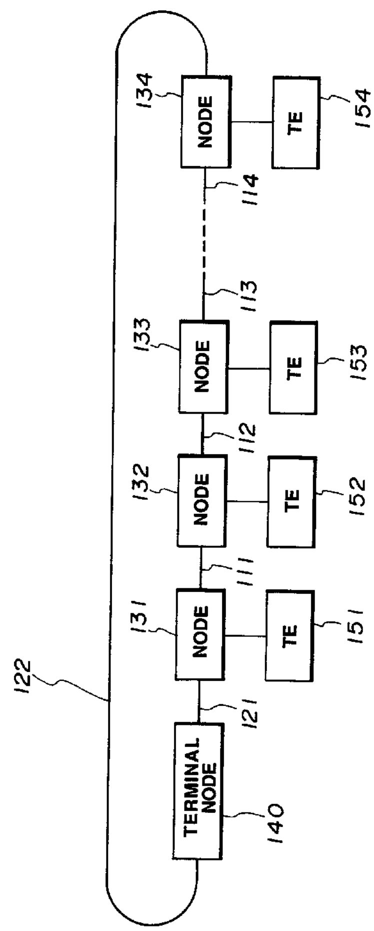


**FIG. 3**

EP 0 519 712 A2

The present invention relates to a bus-type communication network, having facilities for attending to an accident in the network.

The structure of bus-type communication networks is well known and is used in commercially available local area networks, such as Ethernet.

Bus-type structures are also used in optical communication networks, using an optical fibre as a transmission line. Thus, such an arrangement provides the advantages of high data capacity and non-inductivity, while retaining the flexible construction of the bus-type arrangement.

A block diagram of a bus-type communication network is shown in Figure 1, consisting of transmission lines 511 to 514. In addition, nodes 521 to 524 are provided with terminal equipment connected thereto. The nodes, with the exception of the two nodes positioned at the ends of the network, have transmission lines connected on either side and signals from these nodes are transmitted to nodes at both of said sides, thereby performing communication between nodes.

In a communication system conveying electrical signals, coaxial cables or twisted wire pairs provide transmission lines and each node has a transmitter and a receiver. Thus, the output from a transmitter and the input of a receiver are connected by a transmission line.

In an optical communication system, optical fibres are used as the transmission medium and each node has a photo-electric (O/E) conversion device and an electro-photic (E/O) conversion device therein. The optical communication systems are classified as being of the passive type or of the active type.

In the passive type of system, a part of an optical signal is retrieved from a transmission line by an optical branching/combining device and the retrieved optical signal is supplied to the O/E conversion device. An optical signal generated as an output from the E/O conversion device is transmitted to the transmission line through the optical branching/combining device.

In the active type of system, an O/E conversion device and an E/O conversion device are provided for bidirectional communication at both terminals of the node. The O/E conversion device converts an optical signal from the transmission line into an electric signal. The E/O conversion device converts an electric signal from the O/E conversion device into an optical signal and the optical signal is transmitted to the transmission line.

The network usually performs communication with the above described structure. Communication is, however, cut off by many types of accidents. Thus, it is desirable to provide a network with facilities for dealing with such accidents, to provide a reliable communication environment.

Typical accidents include the breaking of transmission lines and operation failure of nodes. When node trouble occurs in the passive type system, the problem node cannot perform communication but the remaining network remains operable. However, in the a active type system, the network is broken by the non-operating node.

As used herein, an "accident" to a node includes the situations in which a node is separated from a transmission line or power supply to the node is removed or some other operation is performed, so as to render the node inoperable.

A passive type optical communication system is shown in Figure 2, of a type which can deal with accidents. Optical fibre 611 to 614 are transmission lines of the network, nodes 621 to 624 connect terminal equipment to the transmission lines and optical fibres 631 to 634 are spare transmission lines. Each node has an optical branching/combining device, an O/E conversion device, an E/O conversion device and a communication control circuit.

In order for an accident to be dealt with, such as the breaking of an optical fibre, optical fibres, branching/combining devices, O/E conversion devices and E/O conversion devices are doubled, to form a spare transmission path.

In the bus-type optical communication network shown in Figure 2, the optical fibres 611 to 614 are usually used as a transmission line. Therefore, a signal does not normally exist on the spare transmission line, composed of optical fibres 631-634. Each node transmits optical signals from the E/O conversion device to both right and left nodes and said node receives optical signals from both right and left nodes by the E/O conversion device. However, node 621 transmits or receives optical signals to or from the right node only and node 624 transmits or receives optical signals to or from the left node only.

For example, an optical signal from node 622 is transmitted via optical fibre 611 and 612, therefore node 621 receives an optical signal from optical fibre 611, while node 624 receives an optical signal from fibre 614. Node 622 receives optical signals from node 621, via optical fibre 611 and receives optical signals from node 623 or 624, via optical fibre 612.

If optical fibre 612 is broken, this break is detected when the network attempts to perform communication via that fibre, for example, by communication between nodes 621 and 623. When node 621 detects that communication with node 623 is impossible, node 621 informs the other nodes, by using the spare transmission line, of the fact that an accident has occured in the transmission line which is usually used. Thereafter, each node performs communications using the spare transmission line. Thus, the network can still perform communications.

The next stage is to locate the position where the accident has occured, so that a repair may be made. Node 621 communicates with all nodes of the network and locates the node which cannot communicate.

Thus, node 621 identifies the point where the accident has occured.

As previously stated, accidents may also occur at nodes themselves. In this situation, the node cannot perform communication by using the transmission line which is usually used, however, in addition the node is also unable to use the spare transmission line, thus the network is separated by that node and it cannot perform communication through that node.

Thus, the above mentioned system has the following problems:

1. An additiona transmission system is required, effectively requiring the capacity of two networks to provide a transmission system for of a single network. Thus, the overall cost of the system is high.
2. It is difficult to find the position of an accident, so that said accident may be repaired. The specific communication for finding a point must be performed by one node.
3. In the active type system, communication is degraded when a node is in trouble.

The invention is made in consideration of the above problems and it is an object of the invention to provide a bus type communication network which is simple in construction and can deal with accidents.

It is another object of the invention to provide a bus type communication network which can deal with an accident, without providing a particular function for each terminal equipment of the network.

It is another object of the invention to provide a bus type communication network which can transmit an optical signal.

It is another object of the invention to provide a terminal node which can deal with an accident.

According to a first aspect of the present invention, there is provided a bus type communication network, in which communications among a plurality of terminal equipments are provided via a bus, comprising detection means for detecting that a bus is broken and connection means for connecting the ends of the bus in accordance with the detection result of said detection means.

According to a second aspect of the present invention, there is provided a terminal node, wich is provided in a bus type communication network in which communications among a plurality of terminal equipments are performed via a bus, comprising first input means for inputting a signal from a first end of the bus, second input means for inputting a signal from a second end of the bus and connection means for connecting said first and second input means when the bus is broken.

The above and other aspects, features and advantages of the invention will become apparent from the following detailed description of the preferred embodiments which refer to the accompanying drawings.

The invention will now be described, by way of example only, with reference to the accompanying drawings, in which:

Figure 1 shows a block diagram of a bus type communication network;

Figure 2 shows a block diagram of a passive type optical communication system with an accident recovery function;

Figure 3 shows a block diagram of a bus type communication network according to an embodiment of the present invention;

Figure 4 shows a block diagram of a terminal node of an embodiment of the present invention;

Figure 5 shows a flow diagram of a control procedure for detecting and recovering from an accident;

Figure 6 shows a flow diagram of a control procedure to find a point where an accident has occured;

Figure 7 shows a block diagram of a terminal node of another embodiment of the present invention;

Figure 8 shows a block diagram of a terminal node of another embodiment of the present invention;

Figure 9 shows a block diagram of a terminal node of another embodiment of the present invention;

Figure 10 shows a block diagram of a bus type communication network according to another embodiment of the present invention;

Figure 11 shows a block diagram of a node provided in the network of Figure 10; and,

Figure 12 shows a block diagram of a terminal node of another embodiment of the present invention.

A block diagram of a bus type optical communication network is shown in Figure 3. Optical fibres 111 to 114 are transmission lines for connecting nodes 131 to 134. Optical fibres 121, 122 connect a terminal node 140 with nodes 131, 134 located at the ends of the network. Terminal equipment (TE) 151 to 154, such as a computer or a printer, are connected to nodes 131 to 134, therefore said equipments can communicate with each other, via the optical fibres.

A block diagram of the terminal node applied to the network of Figure 3 is shown in Figure 4, in which optical fibres 121, 122 are transmission lines of the network. Optical branching of the combining devices 221, 222 retrieve a part of the optical signal and supply said retrieved part to an input of an O/E conversion device. An optical switch 230 cuts off the optical signal or passes the optical signal for further transmission. An optical switch of this type is disclosed in European patent publication no. 0386772. O/E conversion devices 241, 242 convert the optical signal from the optical branching/combining device into an electrical signal. Buffer memories 251, 252 temporarily store the electrical signal from the O/E conversion device 241, 242 respectively. A control circuit 260, including a program controlled microcomputer, controls the optical switch 230 in accordance with data stored in the buffer memories 251, 252.

The operations for dealing with an accident will now be described. When the accident is detected, the terminal node short circuits the optical fibre 121, by terminal node 140, with optical fibre 122, thereby allowing optical signals to pass through node 140. Thus, as a result, the nodes adjacent to the optical fibre where the accident occured become the ends of the network and the transmission line of the network can be reconstructed.

Operation when optical fibres 112 is broken will be described with reference to Figure 3. If terminal node 140 detects trouble said terminal node 140 short circuits the transmission line, therefore, nodes 132, 133 become the ends of the network (bus) and the network performs normal communication in this state. Alternatively, if node 132 is in trouble and the network is separated by node 132, the terminal node 140 short circuits the transmission lines when terminal node 140 detects trouble. Therefore, the nodes 131, 133 become the ends of the network and the network is reconstructed. In this state, the network performs communication, except for the node 132 in trouble.

Thereafter, terminal node 140 identifes the point where the accident has occured so that action may be initiated to repair the accident. When the terminal node 140 detects that the accident has been repaired, the node cuts off the transmission line again and becomes the end of the network bus.

As detailed in Figure 4, optical switch 230 is controlled by control circuit 260 and the optical switch 230 cuts off the transmission line prior to an accident being detected. Namely, the network is separated by the point between the optical branching/combining devices 221, 222.

The optical branching/combining device 221 retrieves a part of the optical signal from the optical fibre 122 and supplies the retrieved optical signal to the O/E conversion device 241. The optical branching/combining device 221 does not supply the optical signal from the optical switch 230 to the O/E combining device 241.

The O/E conversion device 241 converts the supplied optical signal into an electrical signal and supplies the electrical signal to the buffer memory 251. The buffer memory 251 temporarily stores the electrical signal as data. The period during which the buffer memory 251 stores this data is determined so that said period is equal to the maximum time required to transmit the optical signal from nodes 131, 134 to the terminal node 140. Namely, the period is the longer of the time required to transmit the optical signal from the node 131 to the terminal node 140, via the optical fibre 121, or the time required to transmit the optical signal from node 134 to the terminal node 140 via the optical fibre 122.

In Figure 4, the optical signal from the optical fibre 121 is processed by the optical branching/combining device 222, the O/E conversion device 242 and the buffer memory 252, in the same way as the optical signal from the optical fibre 122.

Figure 5 is a flow diagram showing the detection operation which is performed by the control circuit 260, when the terminal node receives the optical signal, S501. The control circuit 260 compares data stored in the buffer memory 251 with data stored in the buffer memory 252 (S502) and if these items of data are equal, the control circuit 260 decides that the network is performing normally and keeps the optcial switch 230 in its OFF state, S503, S504.

If these items of data are not equal (usually, only one of the buffer memories 251, 252 stores data) the control circuit 260 operates the optical switch 230 so as to short circuit the optcial fibres 121, 122 connected to the terminal node 40, S503, S505.

After the accident has been repaired, data stored in the buffer memories becomes equal, therefore, the control circuit 260 places the optical switch 230 into the OFF state again, to separate the network by the point between the optical fibre 121 and optical fibre 122.

The method for locating the point of an accident will be described with reference to the flow diagram shown in Figure 6, which describes the operation of control circuit 260. It will be assumed that the optical fibre 112 has been broken in the network shown in Figure 3.

Control circuit 260 continues to monitor data in buffer memories 251, 252, even after the accident has been detected and the network has been reconstructed. The network is separated by optical fibre 112 and, accordingly, optical signals transmitted by nodes 133, 134 and are supplied to buffer memory 251 only, without being supplied to buffer memory 252.

Alternatively, the optical signal transmitted by node 131, 132 is supplied as an input to buffer memory 252 only and is not supplied as an input to buffer memory 251. Thus, if the control circuit contains data defining the arrangement of the nodes in the network, said circuit can find the point where the accident has occured by recognising the nodes which transmit the optical signals stored in each of the two buffer memories 251, 252.

Specifically, when the terminal node receives the optical signal after the accident has been detected (S601) the control circuit 260 recognises the node which has transmitted the optical signal (S602). Furthermore, the control circuit 260 stores the data representing the recognised node in either one of the two data tables provided in connection with the two buffer memories 251, 252, S603. After the optical signals from all of the nodes have been received, the control circuit 260 finds the point where the accident has occured by monitoring the two data tables, S604, S605.

As mentioned above, the terminal node is provided in the bus type communication network and if any accident occurs in the bus, the terminal node connects the nodes located at the ends of the network. Thereby, the network can be reconstructed and the point where the accident occured is now defined as the ends of the reconstructed network. Due to this structure, even if the transmission line is broken or the accident occurs in the node, the network can operate normally, without providing a particular function for each of the nodes. Furthermore, the point where the accident has occured can be found by comparing data supplied to the terminal node. Furthermore, the point of the accident can also be determined while the network performs communication.

A block diagram of another structure of the terminal node is shown in Figure 7. Optical fibres 121, 122, the optical branching/combining devices 221, 222, the O/E conversion devices 241, 242 the buffer memories 251, 252 and the control circuit 260 are substantially similar to those shown in Figure 4. An optical amplifier 270 cuts off the optical signal or amplifies the optical signal and passes said amplified optical signal. Thus, the terminal node shown in Figure 7 has the optical amplifier 270 as an alternative to the optical switch 230 shown in Figure 4. The optical amplifier 270 is disclosed in European patent publications 0444607 and 0450603. The control circuit 260 detects that an accident has occurred and finds the point where said accident has occurred, in a way substantially similar to that described above with reference to Figure 4.

The operation of the network having the terminal node shown in Figure 7 will be detailed. When the network operates normally, a terminal node places the optical amplifier 270 into the OFF state, to cut off the optical signal. The terminal node is located at the ends of the bus. Under this state, the bus-type communication system, having nodes 131, 134 at the ends of the network, performs communication.

When an accident is detected in the network, the control circuit 260 places the optical amplifier 270 into its ON state, to thereby short circuit the optical fibres 121, 122 connected to the terminal node and passes the optical signal. As a result, the nodes adjacent to the optical fibre or the node where the accident has occurred, become the ends of the network (bus) and the transmission line of the network can be reconstructed. The loss of optical signal caused by passing through the terminal node is compensated by the amplifying function of the optical amplifier 270.

After the accident has been repaired, a terminal node places the optical amplifier into its OFF state again, to separate the network by the point between the optical fibre 121 and the optical fibre 122.

As described above according to the structure shown in Figure 7, the terminal node cuts off or bypasses the optical signal by using the optical amplifier, therefore the loss of the optical signal caused by the insertion of the terminal node is compensated. Furthermore, the optical amplifier can amplify frequency multiplexed optical signals simultaneously, therefore the structure of Figure 7 is suitable for frequency multiplexed communications. Hereinafter, the electrical communication network to which the structure of the above mentioned bus type communication is applied, will be detailed.

The structure of the electrical communication network is substantially similar to that shown in Figure 3, except that the transmission lines consist of coaxial cables and not optical fibres.

Figure 8 shows a block diagram of another structure of a terminal node, comprising coaxial cables 411, 412 which form the transmission lines of the network, a switch 420, placed into its ON state to make a bypass route, receivers 431, 432 for convering the signal on the transmission line into logical level signals, buffer memories 441, 442 for temporarily storing the signal from the receiver 431, 432 and a control circuit 450 for controlling the switch 420 on the basis of the data in the buffer memories 441, 442.

The operation of the terminal node shown in Figure 8 will now be described.

The switch 420 is controlled by the control circuit 450 and is maintained in the cut off state until an accident has been detected in the network. Namely, the network is separated by the point between the coaxial cable 411 and the coaxial cable 412. The receiver 431 converts the signal from the coaxial cable 411 into a logical level signal and supplies said logical level signal into the buffer memory 441. The buffer memory 441 temporarily stores the logical level signal as data and the period for which the buffer memory 441 keeps this data is substantially similar as that required for the system shown in Figure 4.

Alternatively, the signal from the coaxial cable 412 is processed by the receiver 432 and the buffer memory 442 receives data in the same way as a signal from the coaxial cable 411.

When an accident is detected in the network, the control circuit 450 places the switch 420 into its ON state, to pass the electrical signal between the coaxial cables 411 and 412. Therefore, the nodes adjacent to the point where the accident has occurred become the ends of the network (bus). A control circuit 450 detects that the accident has occurred and finds the point where the accident has occurred, in a way substantially similar to that described above.

Another structure of a terminal node will now be described, consisting of an active type terminal node for an optical network. The structure of the optical network is substantially similar to that shown in Figure 3. A block diagram of a terminal node is shown in Figure 9, in which the optical signals from the optical fibres 122, 121 are supplied as inputs to O/E conversion devies 331, 332, via the optical branching/combining devices 321, 322, respectively. The optical signals from the E/O conversion devices 342, 341 are supplied as outputs to the optical fibres 122, 121 via the optical branching/combining devices 321, 322, respectively.

The O/E conversion devices 331, 332 convert the optical signal from the optical branching/combining devies 321, 322 into the electrical signal and the E/O conversion devices 341, 342 convert the electrical signal from the O/E conversion devices 331, 332 into the optical signal.

Buffer memories 351, 352 temporarily store the electrical signal as data and the control circuit 360 controls the E/O conversion devices 341, 342, on the basis of the data stored in said buffer memories 351, 352.

The E/O conversion devices 341, 342 are controlled by the control circuit 360, which maintains the OFF state until an accident has been detected in the network. Namely, the network is separated by the point between the optical branching/combining device 321 and the optical branching/combining device 322. The optical signal on the optical fibre 122 is supplied to the O/E conversion device 331 through the optical branching/combining device 321 and the O/E conversion device 331 converts the optical signal into the electrical signal. The converted electrical signal is supplied to the E/O conversion device 341 and the buffer memory 351. The E/O conversion device is controlled by the control circuit 360 and is placed in its ON state or in its OFF state. When the E/O conversion device 341 is in its ON state, said device converts the electrical signal from the O/E conversion device 331 into an optical signal and the converted optical signal is transmitted to the optical fibre 121 through the optical branching/combining device 322.

Buffer memory 351 temporarily stores the electrical signal from the O/E conversion device 331. The period for which the buffer memory 351 maintains the electrical signal is substantially similar to that as described with reference to Figure 4.

The optical signal from the optical fibre 121 is processed by the optical branching/combing device 322, the O/E conversion device 332, the E/O conversion device 342 and the buffer memory 352, in the same way as the optical signal from the optical fibre 122.

When the control circuit 360 detects an accident in the network, the control circuit 360 places the E/O conversion devices 341, 342 into the ON state. Therefore, the optical signal from the optical fibre 121 is transmitted to the optical fibre 122 and the optical signal from the optical fibre 122 is transmitted to the optical fibre 121. Thus, the nodes adjacent to the point where the accident has occurred becomes the ends of the network (bus).

The control circuit 360 detects the accident has occurred and finds the point where said accident has occurred, in a substantially similar way as described above. According to the structure shown in Figure 9, the active type terminal node cuts off or bypasses the optical signal, therefore the loss of the optical signal can be prevented.

A block diagram of another structure of the bus type communication network is shown in Figure 10. The optical fibre 711 to 722 are transmission lines in the network and nodes 741 to 744 along with terminal node 730 are connected to the optical fibres 711 to 722. Terminal equipment 751 to 754 are connected to nodes 741 to 744.

Each of nodes 741 to 744 and terminal nodes 730 have a normal transmission route and a bypass transmission route. The normal transmission route is used for transmitting and receiving optical signals. The normal transmission routes and the bypass transmission routes of adjacent nodes are connected with optical fibres. The normal transmission routes of the nodes located at the end of the bus (nodes 741 and 744) are connected to the bypass transmission routes of themselves, with optical fibres 722 and 716.

Under normal operation, the normal transmission route of the terminal node 730 is in a cut off state and nodes 741 and 742 adjacent to terminal node 730 are located at the ends of the network.

The transmission of the optical signal at node 743 will be explained, to provide an improved understanding of the transmission of an optical signal in the normal state. The optical signal transmitted from node 743 is supplied from the left side to the normal transmission route of node 744, located to the right of node 743. The optical signal transmitted from node 743 is supplied on the left side into the normal transmission route of node 741, located at the left of the terminal node 730, via the bypass transmission routes of all of the nodes in the network. For example, the optical signal transmitted from node 743 is supplied to the normal transmission route of the node 741, through optical fibres 714, 715 the normal transmission route of node 744, the optical fibre 716, the bypass transmission route of the node 744, the optical fibres 717, 718, the bypass transmission route of node 743, the optical fibre 719, the bypass transmission route of node 742, the optical fibre 720, the bypass transmission route of the terminal node 730, the optical fibre 721, the bypass transmission route of node 741 and the optical fibre 722.

The optical signal transmitted from each of nodes 742, 744, 741 is supplied to the normal transmission route of node 743, through the reverse ports to that described above.

When terminal node 730 detects an accident, the terminal node short circuits its normal transmission line, so as to pass the optical signal between the optical fibres 711 and the optical fibres 712. The nodes adjacent to the point where the accident has occurred become the ends of the network (bus).

The transmission and reception by node 743, when optical fibres 713 is broken, will be described below.

Between node 743 and node 741 or 744, the optical signal is transmitted along the path which is the same as that used before the accident occurred. However, between node 743 and node 742, the optical signal is transmitted along the following path. The optical signal transmitted from node 743 is supplied to the normal transmission route of node 742, through optical fibres 714, 715, the normal transmission route of node 744, the optical fibre 716, bypass transmission route of node 744, optical fibres 717, 718, the bypass transmission route of node 743, optical fibre 719, the bypass transmission route of node 742, optical fibre 720, the bypass transmission route of terminal node 730, optical fibre 721, the bypass transmission route of node 741, optical fibre 722, the normal transmission route of node 741, optical fibre 711, normal transmission route of the terminal node 730 and optical fibre 712. The optical signal transmitted from node 742 is supplied to the normal transmission route of node 743, through the reverse course to that described above.

After the accident has been repaired, the terminal node detects this condition and, thereafter, the terminal node cuts off its bypass transmission route.

A block diagram of a node of the type used in the bus communication network of Figure 10, is shown in Figure 11. Optical fibres 911 to 914 are the transmission lines of the network and optical fibre 922 is the bypass transmission route. A T-coupler 923 supplies the optical signal on the optical fibres 911, 912 into the receiver unit of the node and supplies the optical signal from the transmission unit of the node into the optical fibres 911, 912.

The optical branching/combining device 924 connects the T-coupler 923 with the O/E conversion device 924 and the E.O conversion device 926.

The O/E conversion device 925 converts the incident optical signal into the electrical signal and the E/O conversion device 926 converts the electrical signal into an optical signal. The buffer memories 927, 929 temporarily store the electrical signals, which are supplied to and received from the communication control circuit 928.

The node shown in Figure 11 has a normal transmission route and a bypass transmission route, as previously described. The bypass transmission route consists of optical fibre 922, which short circuits optical fibre 913 and optical fibre 914.

The normal transmission route connects optical fibres 911, 912 to the transmission unit and the reception unit, with the T-coupler 923. The T-coupler 923 supplies a part of the optical signal from the optical fibres 911, 912 to the optical branching/combining device 924 and supplies the optical signal from the optical branching/combining device 924 into the optical fibres 911, 912.

The optical branching/combining device 924 is connected to the O/E conversion device 925 and the E/O conversion device 926, to supply the optical signal from the T-coupler 923 to the O/E conversion device 924 and to supply the optical signal from the E/O conversion device 926 into the T-coupler 923. The O/E conversion device 925 converts the optical signal into an electrical signal. This electrical signal is supplied to the communication control circuit 928, via the buffer memory 927.

The electrical signal from the communication control circuit 928 is supplied to the E/O conversion device 926 via buffer memory 929. The E/O conversion device 926 converts the electrical signal into an optical signal, which is in turn supplied to the T-coupler 923, via the optical branching/combining device 924. A communication control circuit 928 connects the external terminal equipment.

A block diagram of the terminal node of the network shown in Figure 10 is detailed in Figure 12. The optical fibres 811 to 814 are transmission lines of the network and optical fibre 820 is the bypass transmission route. The optical branching/combining device 831 connects the optical fibre 811 to the O/E conversion device 841 and the E/O conversion device 852. The optical branching/combining device 832 connects the optical fibre 812 to the O/E conversion device 842 and the E/O conversion device 841.

The E/O conversion devices 851, 852 convert the electrical signal into an optical signal and the O/E conversion devices 841, 842 convert the optical signal into an electrical signal. Buffer memories 861, 862 temporarily store the electrical signals and the control circuit 870 detects an accident, on the basis of data stored in the two buffer memories 861, 862, and controls the E/O conversion devices 851, 852 and finds the point where the accident has occurred.

The terminal node shown in Figure 12 has a normal transmission route and a bypass transmission route, similar to those present in the node shown in Figure 11.

In the normal operating state, the E/O conversion devices 851, 852 are placed in their OFF state, under the control of the control circuit 870. Accordingly, the optical branching/combining device 831 and the optical branching/combining device 832 are separated. The optical signal from the optical fibre 811 is supplied to the E/O conversion device 852, via the optical branching/combining device 831 and the O/E conversion device 841 converts the optical signal into an electrical signal, which is transferred to the E/O conversion device 851 and the buffer memory 861. The E/O conversion device 851 is controlled by the control circuit 870. When the E/O conversion device 851 is in the ON state, the E/O conversion device 851 converts the electrical signal from the O/E conversion device 841 into an optical signal. Furthermore, the converted optical signal is transmitted to the optical fibre 812 via the optical branching/combining device 832.

The buffer memory 861 temporarily stores the electrical signal from the O/E conversion device 841 as data and the period for which the buffer memory keeps this data is substantially similar to that required for the embodiment shown in Figure 4. The optical signal from the optical fibre 812 is processed by the optical branching/combining device 832, the O/E conversion device 842, the E/O conversion device 852 and the buffer memory 862, in the same way as the optical signal from the optical fibre 811.

When a control circuit 870 detects an accident, said circuit places the E/O conversion devices 851, 852 into their ON states, so as to transmit the signal through the normal transmission route of terminal node 730. Consequently, the nodes adjacent to the point where the accident has occurred become the ends of the network (bus). After the accident has been repaired, the terminal node 730 cuts off the normal transmission route and becomes the ends of the network (bus).

The control circuit 870 detects that an accident has occurred and finds the point where the accident has occureed, in a way similar to that described with reference to the earlier embodiment. The position of the terminal node shown in Figure 10 is not restrictive and the terminal node may be located at any arbitrary position within the network. The connection of the normal transmission route and the bypass transmission route is also not restrictive and any connections may be adopted, if they form a signal transmission path.

The arrangement of the normal transmission paths of the terminal nodes and the other nodes is, however, to find the point at which the accident has occurred. Accordingly, a terminal node must contain data relating to the arrangement of the normal transmission routes as well as the arrangement of nodes.

A passive type node, which does not behave like a repeater, is shown in Figure 11, although node 741 to 744 may, alternatively, be active type nodes.

As previously described, the bus type communication network has a terminal node, which normally cuts off the signal when an accident occurs in the network, the terminal node passes the signal, so as to reconstruct the network. Due to this structure, even if an accident does occur, the network can operate normally without providing the particular function for each node. Furthermore, the point at which an accident has occurred can be found, while the network continues to communicate.

The preferred embodiments described herein are illustrative and not restrictive, the scope of the invention being indicated by the appended claims and all variations which come within the meaning of the claims are intedned to be embraced therein.

## Claims

1. A bus-type communication network in which communications among a plurality of terminal equipments are performed via a bus, comprising:

   detection means for detecting that the bus is broken; and

   connection means for connecting the ends of the bus in accordance with the detection result of said detection means.

2. A bus-type communication network according to claim 1, wherein an optical signal is transmitted through the bus.

3. A bus-type communication network according to claim 2, wherein said connection means comprises an optical switch for cutting off or passing the optical signal.

4. A bus-typed communication network according to claim 2, wherein said connection means comprises an optical amplifier for cutting off or amplifying the optical signal.

5. A bus-type communication network according to claim 2, wherein said connection means comprises an O/E conversion device for converting the optical signal into an electrical signal and an E/O conversion device for converting the electrical signal into an optical signal.

6. A bus-type communication network according to claim 1, wherein said detection means performs a detection operation by comparing data appearing at the ends of the bus.

7. A terminal node which is provided in a bus-type communication network in which communication among a plurality of terminal equipments are performed via a bus, comprising:

   first input means for inputting signals from a first end of the bus;

   second input means for inputting signals from a second end of the bus; and

   connection means for connecting said first and second input means when the bus is broken.

8. A terminal node according to claim 7, wherein an optical signal is transmitted through the bus.

9. A terminal node according to claim 8, wherein said connection means comprises an optical switch for cutting off or bypassing the optical signal.

**10.** A terminal node according to claim 8, wherein said connection means comprises an optical amplifier for cutting off an amplifying the optical signal.

**11.** A terminal node according to claim 8, wherein said connection means comprises an O/E conversion device for converting the optical signal into an electrical signal and an E/O conversion device for converting the electric signal into an optical signal.

**12.** A terminal node according to claim 7, further comprising detection means for detecting that the bus is broken.

FIG.1

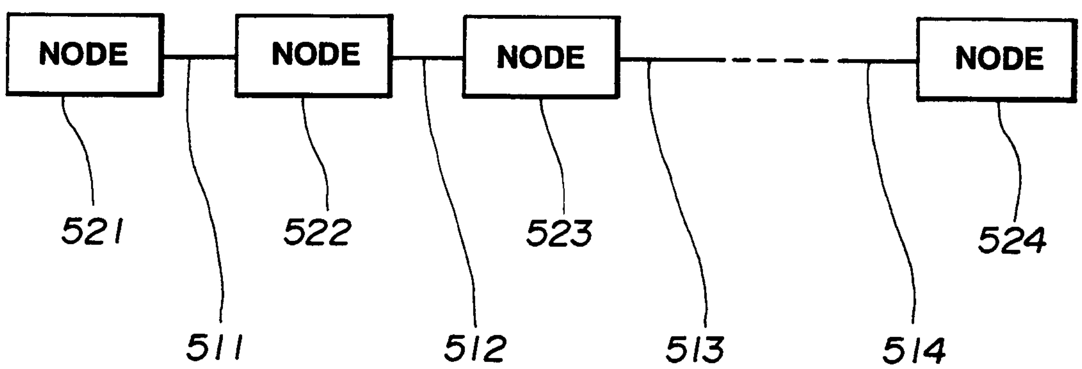
NODE
NODE
NODE
NODE
521
522
523
524
511
512
513
514

FIG.2

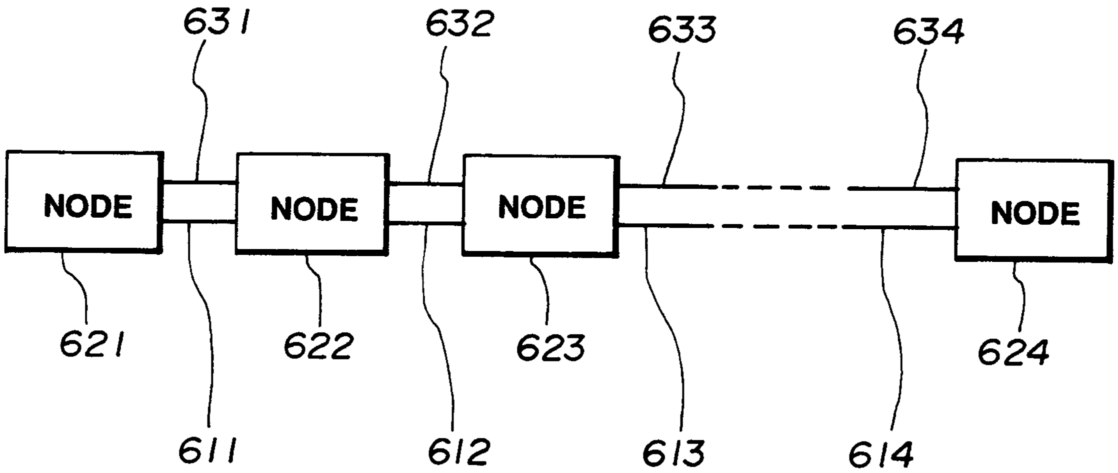
631
632
633
634
NODE
NODE
NODE
NODE
621
622
623
624
611
612
613
614

FIG. 3

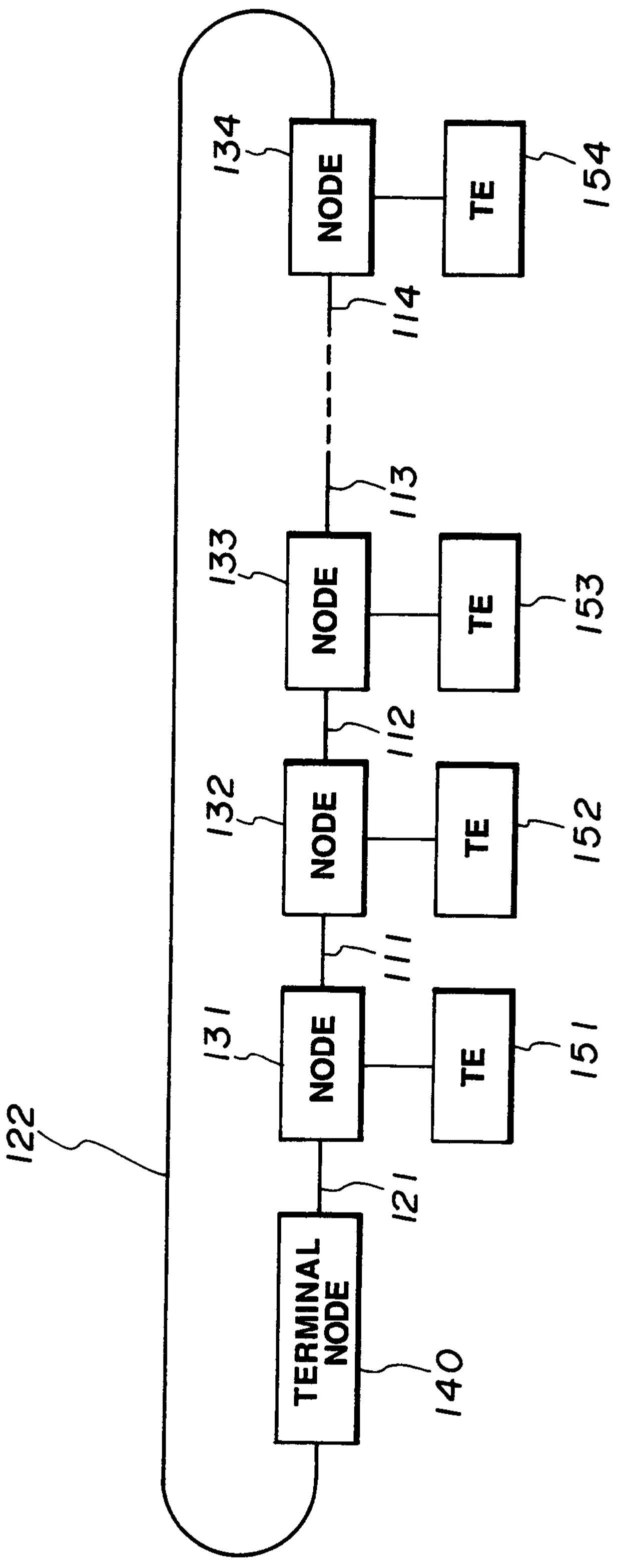
NODE
NODE
NODE
NODE
TE
TE
TE
TE
TERMINAL NODE
122
121
131
111
132
112
133
113
114
134
140
151
152
153
154

FIG.4

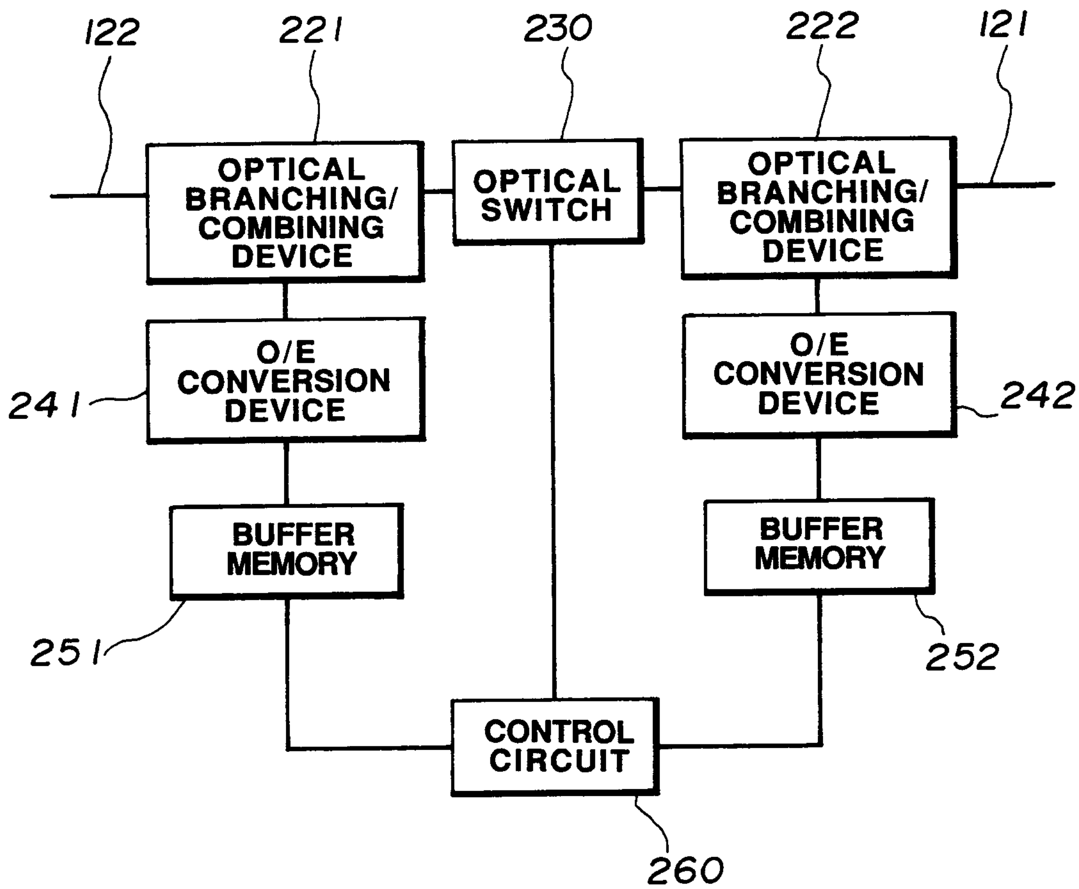
122
221
230
222
121
OPTICAL BRANCHING/ COMBINING DEVICE
OPTICAL SWITCH
OPTICAL BRANCHING/ COMBINING DEVICE
241
O/E CONVERSION DEVICE
O/E CONVERSION DEVICE
242
BUFFER MEMORY
BUFFER MEMORY
251
252
CONTROL CIRCUIT
260

FIG. 5

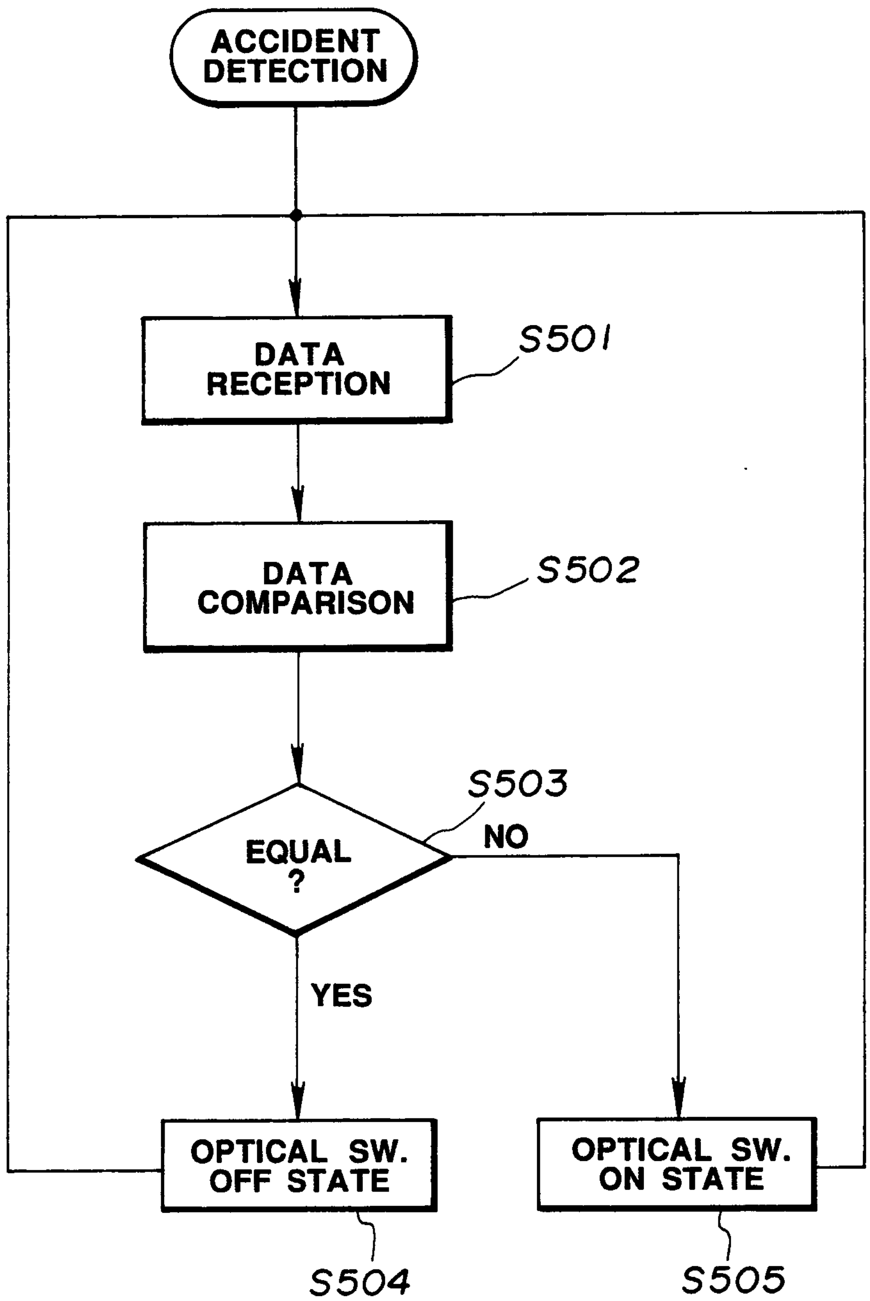
ACCIDENT DETECTION
DATA RECEPTION
S501
DATA COMPARISON
S502
EQUAL ?
S503
NO
YES
OPTICAL SW. OFF STATE
S504
OPTICAL SW. ON STATE
S505

FIG. 6

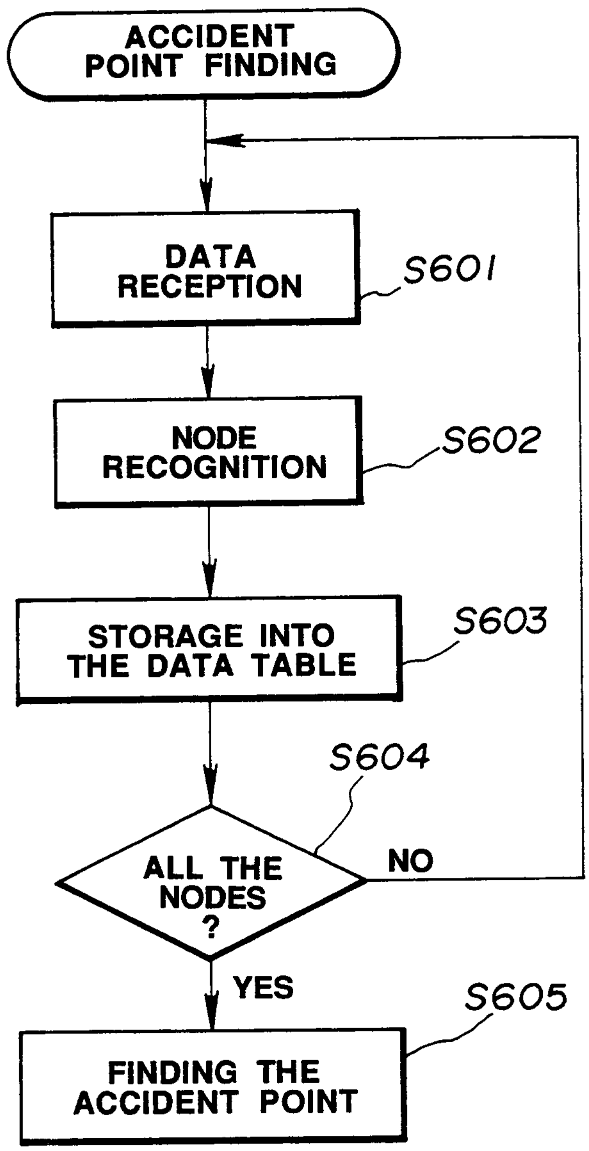
ACCIDENT POINT FINDING
DATA RECEPTION
S601
NODE RECOGNITION
S602
STORAGE INTO THE DATA TABLE
S603
S604
ALL THE NODES ?
NO
YES
S605
FINDING THE ACCIDENT POINT

FIG.7

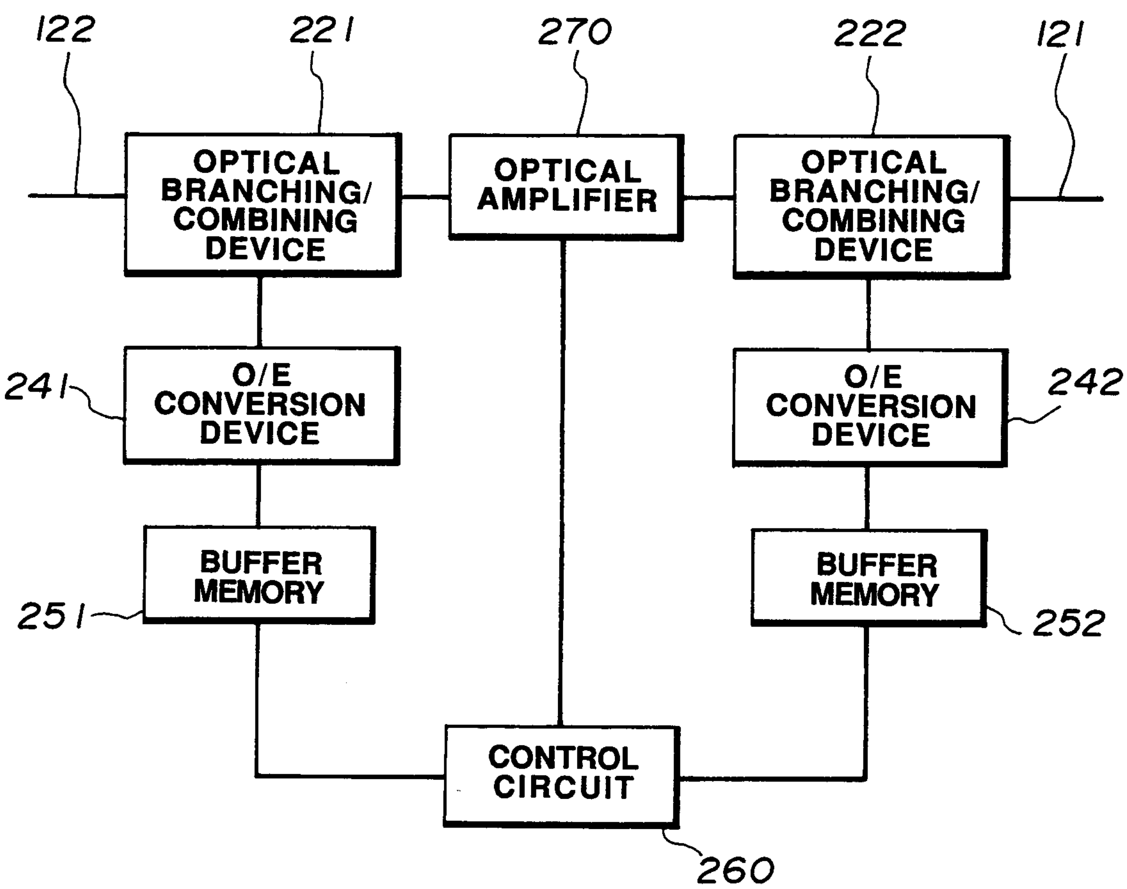
122
221
270
222
121
OPTICAL BRANCHING/ COMBINING DEVICE
OPTICAL AMPLIFIER
OPTICAL BRANCHING/ COMBINING DEVICE
241
O/E CONVERSION DEVICE
O/E CONVERSION DEVICE
242
BUFFER MEMORY
251
BUFFER MEMORY
252
CONTROL CIRCUIT
260

# FIG. 8

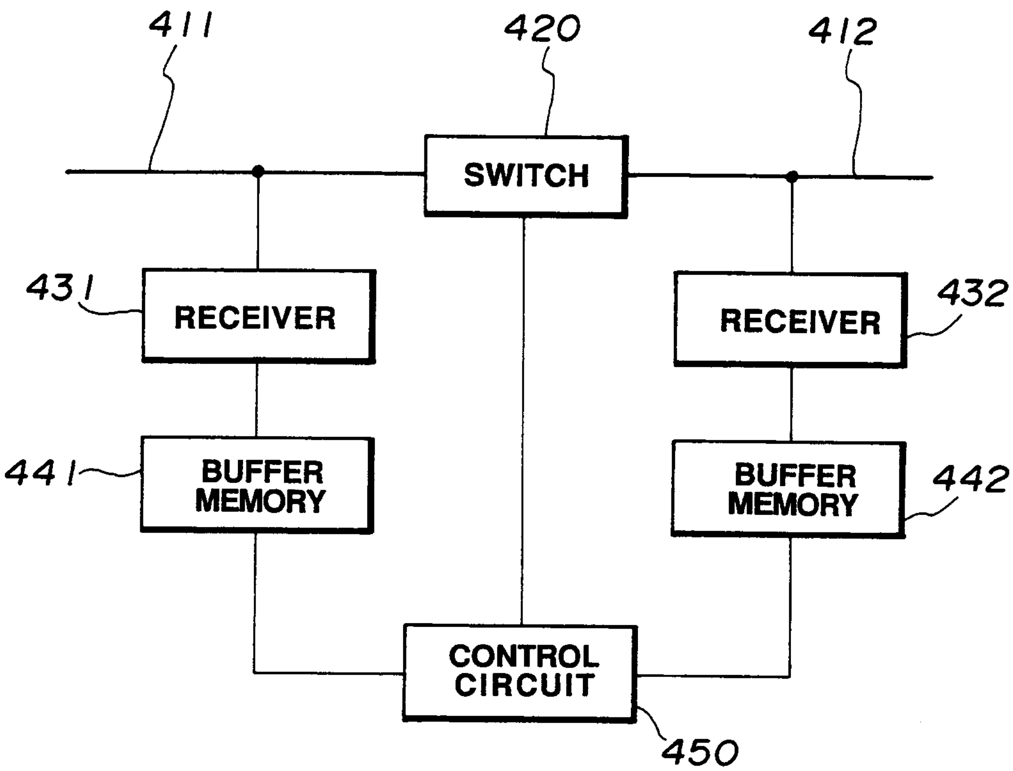
411
420
412
SWITCH
431
RECEIVER
RECEIVER
432
441
BUFFER MEMORY
BUFFER MEMORY
442
CONTROL CIRCUIT
450

FIG. 9

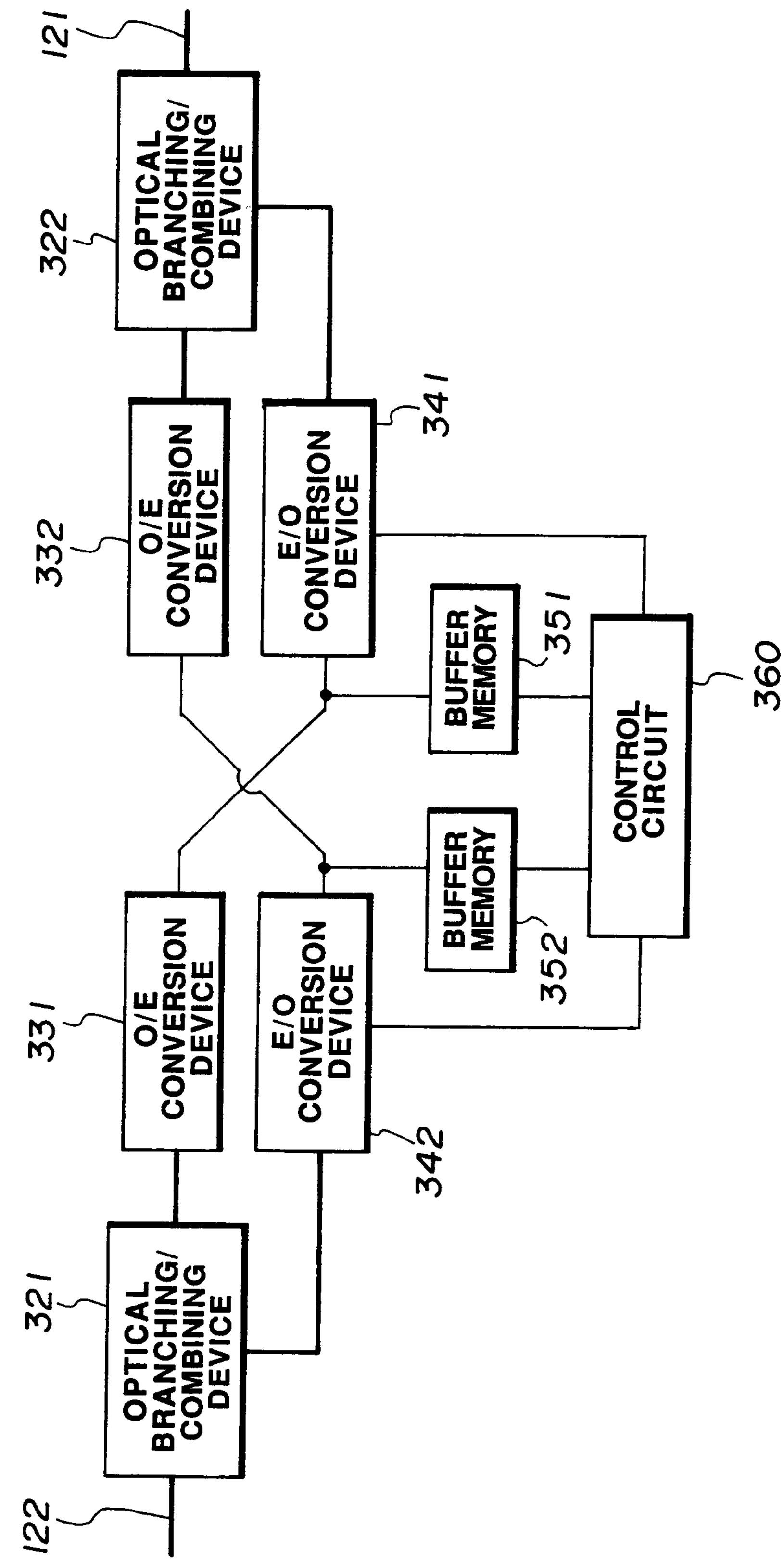
121
322
OPTICAL BRANCHING/ COMBINING DEVICE
332
O/E CONVERSION DEVICE
E/O CONVERSION DEVICE
341
BUFFER MEMORY
351
CONTROL CIRCUIT
360
BUFFER MEMORY
352
331
O/E CONVERSION DEVICE
E/O CONVERSION DEVICE
342
321
OPTICAL BRANCHING/ COMBINING DEVICE
122

FIG.10

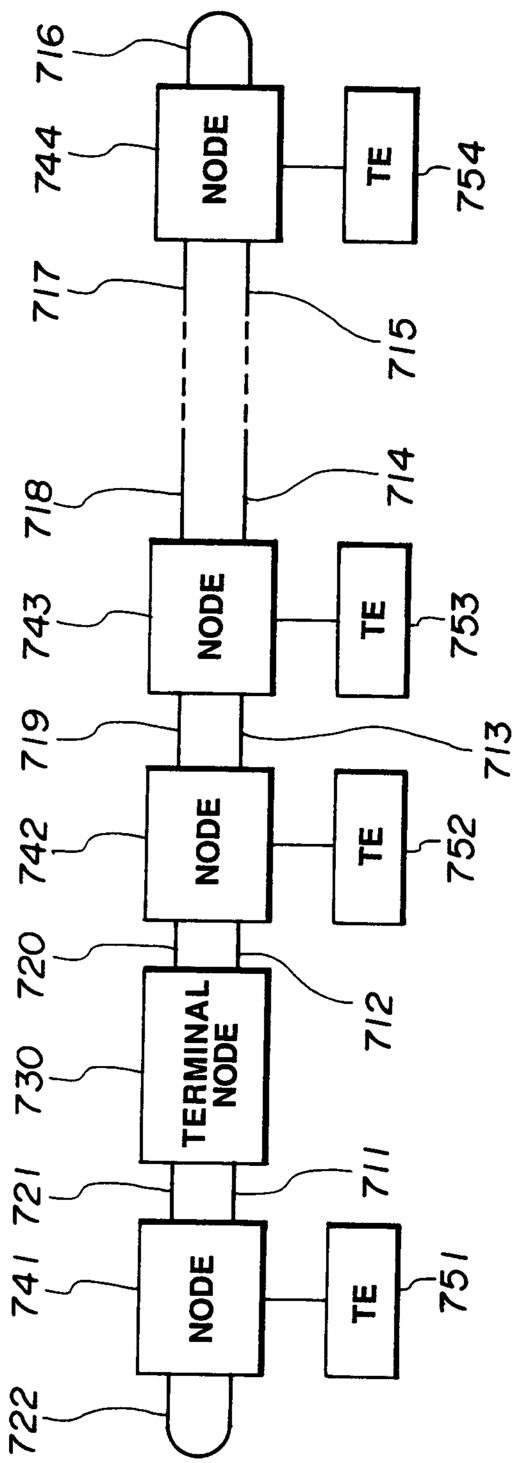

716
744
NODE
TE
754
717
715
718
714
743
NODE
TE
753
719
713
742
NODE
TE
752
720
712
730
TERMINAL NODE
721
711
741
NODE
TE
751
722

FIG.11

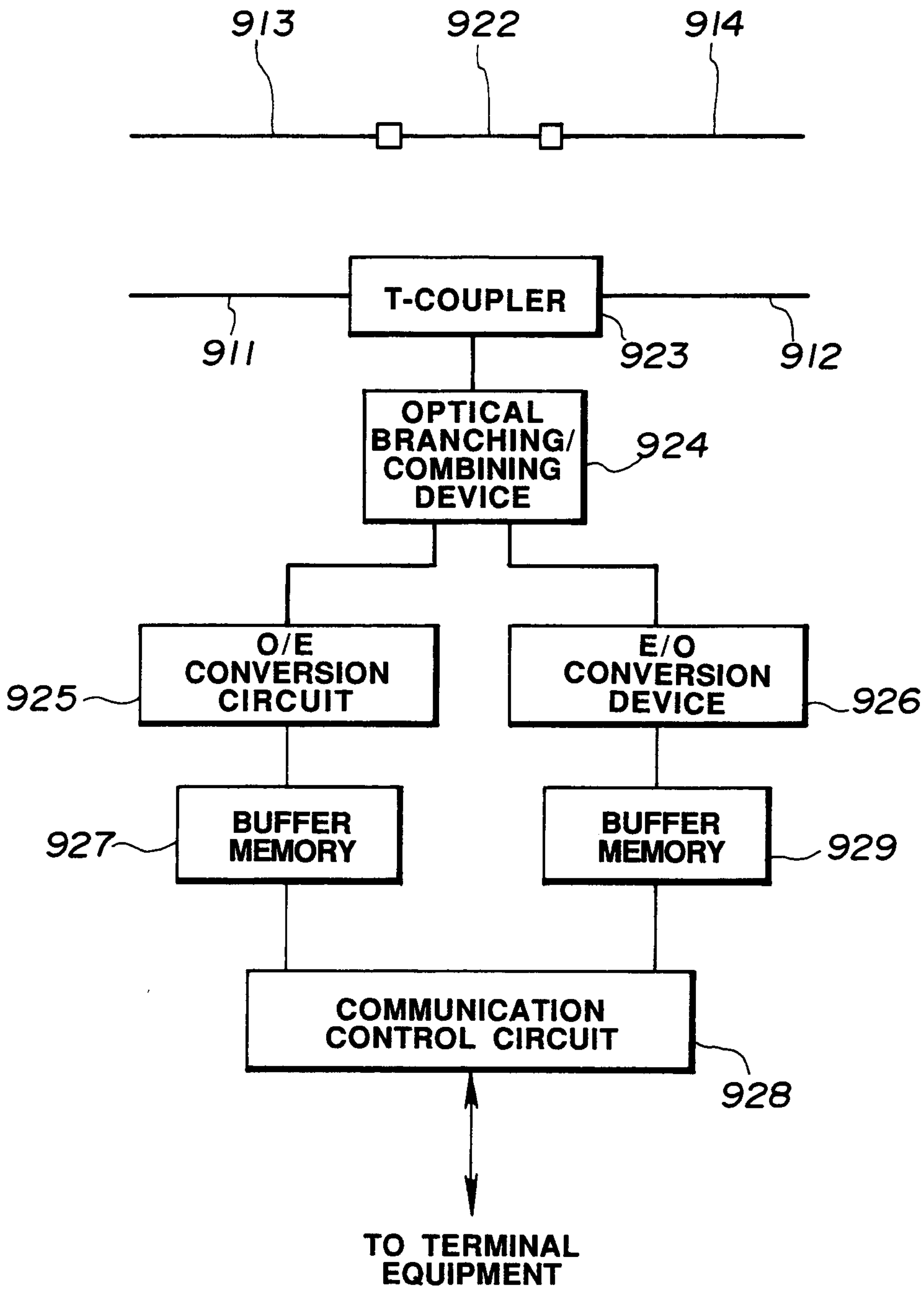
913
922
914
T-COUPLER
911
923
912
OPTICAL BRANCHING/ COMBINING DEVICE
924
O/E CONVERSION CIRCUIT
925
E/O CONVERSION DEVICE
926
BUFFER MEMORY
927
BUFFER MEMORY
929
COMMUNICATION CONTROL CIRCUIT
928
TO TERMINAL EQUIPMENT

FIG.12

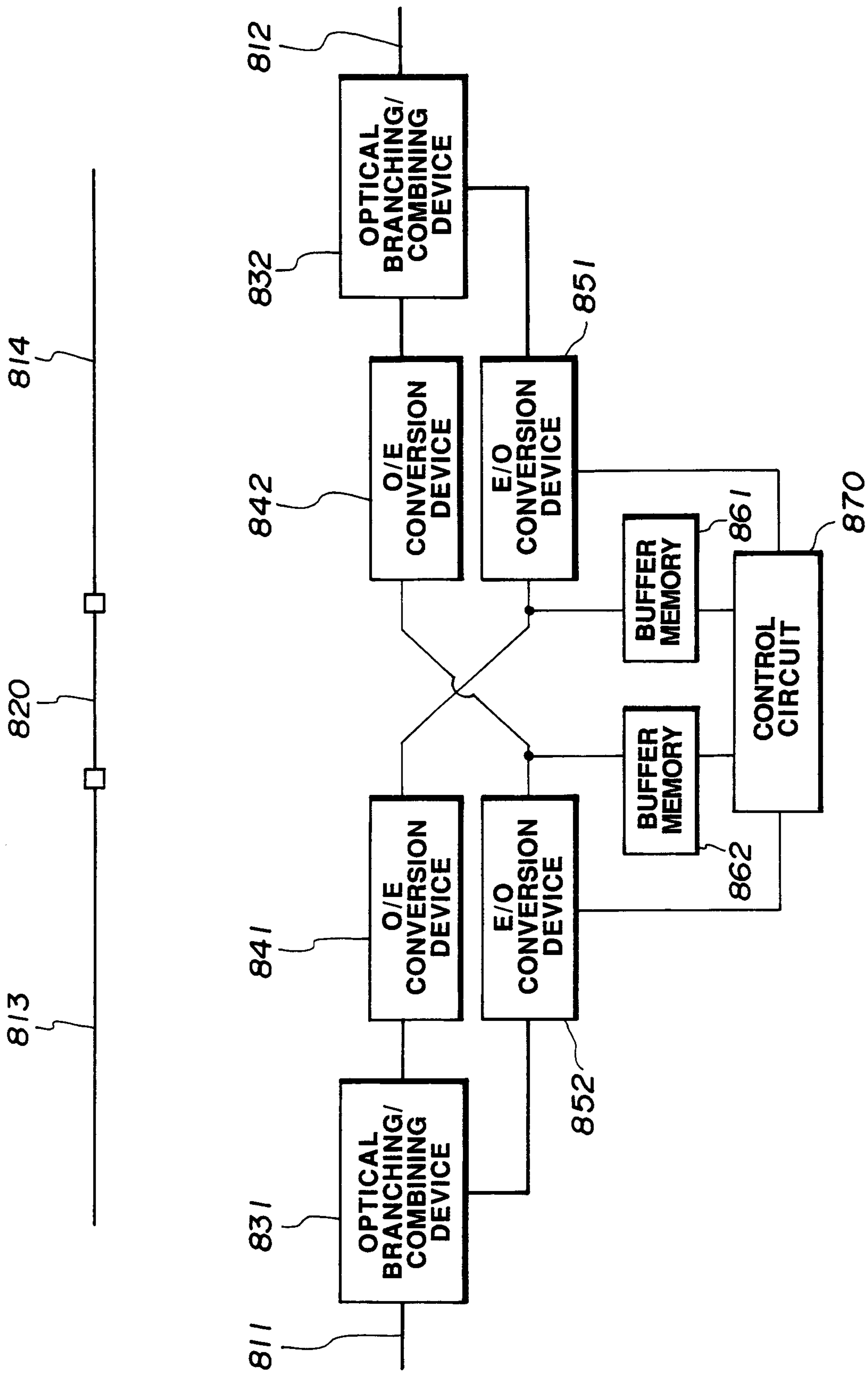
812
OPTICAL BRANCHING/ COMBINING DEVICE
832
814
851
O/E CONVERSION DEVICE
E/O CONVERSION DEVICE
842
861
870
BUFFER MEMORY
820
CONTROL CIRCUIT
BUFFER MEMORY
O/E CONVERSION DEVICE
E/O CONVERSION DEVICE
862
841
813
852
OPTICAL BRANCHING/ COMBINING DEVICE
831
811